# NEUE EUROPÄISCHE PATENTSCHRIFT

(11) **EP 1 416 009 B2**
(45) Veröffentlichungstag und Bekanntmachung des Hinweises auf die Entscheidung über den Einspruch: **27.09.2017**
(45) Hinweis auf die Patenterteilung: 23.07.2008
(21) Anmeldenummer: 03025206.8
(22) Anmeldetag: 04.11.2003
(51) Int. Cl.: C08J 11/06, C08L 19/00

(54) **Ummantelte Gummipartikel**
Coated rubber particles
Particules de caoutchouc enrobées

(30) Priorität: 04.11.2002 DE 10251818
(43) Veröffentlichungstag der Anmeldung: 06.05.2004
(73) Patentinhaber: MRH - Mülsener Rohstoff- und Handelsgesellschaft mbH, 08132 Mülsen/OT St. Jacob (DE)
(72) Erfinder: Belger, Peter, 08056 Zwickau (DE); Baumann, Andreas, 08132 Mülsen (DE)
(74) Vertreter: Kailuweit & Uhlemann Patentanwälte Partnerschaft mbB

(56) Entgegenhaltungen:
- WO-A-92/10540
- WO-A-02/060290
- WO-A2-02/060290
- DE-A1- 19 631 251
- US-A- 5 041 320
- US-A- 5 543 172
- US-A- 5 910 514
- US-A- 6 036 998
- US-A1- 2001 047 051
- US-B1- 6 299 959
- Vornorm DIN V 18035-7, Juni 2002

## Beschreibung

Die Erfindung betrifft ummantelte Gummipartikel als Einstreumaterial für Kunstrasen.

Die wirtschaftliche Bedeutung von Kunstrasen im Sport nimmt immer mehr zu. Im Vergleich zum Naturrasen ergeben sich viele Vorteile, wie z. B. die relativ witterungsunabhängige, beständige Spielflächen mit gleichbleibend guter Bespielbarkeit auch bei intensiver Nutzung, die geringen Wartungsanforderungen und damit niedrigeren Unterhaltskosten.
Bedingt durch seine schwingungsdämpfenden und stoßabsorbierenden Eigenschaften ist Gummi und auch recyceltes Gummi eines der gängigen Materialien zur Herstellung von Bodenbelägen verschiedenster Art im Sportstättenbau und darüber hinaus.
Die Anwendung von recyceltem Gummi erfolgt dabei weitestgehend in gebundener Form, z. B. in elastischen Bahnen, Matten oder sonstigen Formkörpern. Eine Verwendung in loser Form erfolgt als Einstreumaterial in Kunstrasen, d. h. die Polschicht des Kunstrasens wird mit Gummipartikeln - z. T. in Kombination mit Sand - gefüllt.

Die Herstellung des recycelten Gummis erfolgt in der Regel durch die mechanische Zerkleinerung von Altgummi, der z. B. in Form gebrauchter Autoreifen in großen Mengen vorliegt. Die durch die Zerkleinerung, die in der Regel einem Zerreißen gleich kommt, entstandenen Gummipartikeln besitzen eine vieleckige Form mit dementsprechend großer Oberfläche. Vom Stahl- und Textilcord gereinigt und in entsprechenden Korngrößen fraktioniert, werden die Gummipartikel danach unmittelbar ihrer Verwendung, auch als Einstreumaterial, zugeführt.

Nachteilig ist dabei, dass die Gummimischungen meistens Schadstoffe, wie z. B. Zink enthalten, die aus den hergestellten Gummipartikeln, verstärkt durch deren große Oberfläche, ausgewaschen werden können. Nachteilig ist weiterhin der auftretende typische Gummigeruch, der in Abhängigkeit von der Einbausituation mehr oder weniger stark auftreten kann. Auch die schwarze Farbe der so hergestellten Gummipartikel wirkt meist störend.

Aus DE 196 31 251 A1 ist ein Verfahren zum Mischen von Altgummipartikeln mit flammenhemmenden Substanzen und einer wässrigen Dispersion oder Emulsion aus vernetzbarem Polymer unter Wärmezufuhr bekannt. Zweck dieser Mischung und der dadurch erreichten Beschichtung ist es den Flammpunkt des Altgummis zu erhöhen. Die nach diesem Verfahren erreichte Beschichtung verhindert nicht den Gummigeruch und das Auswaschen von Schadstoffen aus dem Altgummi. Die Partikel werden nicht lose verwendet, sondern zur Herstellung von Schichten, Bahnen, Blöcken und Formkörpern eingesetzt. Dem entsprechend liegt der Bindemittelanteil dieser Gummipartikel zwischen 20 und 35 Gewichtsanteile Bindemittel auf 100 Gewichtsanteilen Gummipartikel.

Nach dem Stand der Technik sind weitere Verfahren bekannt, in denen Gummipartikel zu elastischen Bahnen, Matten, Blöcken oder anderen Formkörpern verarbeitet werden. Dem dabei verwendeten Bindemittel werden meist auch Farbstoffe beigefügt, welche die schwarze Farbe überdecken. In Abhängigkeit von den verwendeten Fertigungverfahren sind vergleichsweise hohe Mengen an kostenintensiven Bindemitteln und Farbpigmenten notwendig, um eine sichere Überdekkung der schwarzen Farbe zu bewirken. Bei diesen Verfahren werden die Gummipartikel mit dem Bindemittel umhüllt und während des Mischens oder unmittelbar danach durch das Bindemittel mit andern Partikeln verklebt. Als Ergebnis liegt immer ein fester Verbund von Gummipartikeln vor.

Aus DE 24 55 679 ist ein Verfahren zur Herstellung einer elastischen Schicht aus Gummigranulat bekannt. Hier werden die Gummipartikel direkt nach dem Vermischen zu Schichten vernetzt. Dem entsprechend ist der Bindemittelanteil bei diesem Verfahren hoch - zwischen 25 und 30 Gewichtsanteile Bindemittel auf 100 Gewichtsanteilen Gummigranulat.

Aus DE 25 24 877 ist ein Verfahren zur Herstellung von Dränagebodenbelägen bekannt. Hier werden Altgummipartikel mit Bindemittel auch unter Beigabe von Farbpigmenten vermischt und sofort beim Aushärten zu einem Bodenbelag vernetzt.

Aus DE 21 10 327 ist ein Herstellungsverfahren für elastische Unterlagen für Sportanlagen aus Altreifengranulat und Bindemittel bekannt. Hier werden Granulat und Bindemittel an Ort und Stelle vermischt und auspolymerisiert.

Ein körniger rieselfähiger Werkstoff fällt bei den drei zu letzt genannten Dokumenten nicht als Zwischenprodukt an.

Aus WO 02/18706 A1 ist ein Verfahren zur Herstellung von Kunstrasen bekannt. Diese Kunstrasen bestehen aus festen Kunstfasern, die auf einem flexiblen Basismaterial befestigt sind. Zwischen den Kunstfasern werden Gummikörnchen und/oder Sand eingestreut.

Die Aufgabe der vorliegenden Erfindung besteht darin, ein Gummigranulat als Einstreumaterial für Kunstrasen vorzustellen, bestehend aus Gummipartikeln aus recyceltem Gummi, versehen mit einer weitestgehend langzeitstabilen, wasser- und gasdichten, dauerelastischen Ummantelung, sowie ein Umhüllungsverfahren anzubieten, bei dem die einzelnen Partikel nicht verkleben und rieselfähig bleiben.

Erfindungsgemäß wird die Aufgabe durch ein loses rieselfähiges Gummigranulat gelöst, wobei die einzelnen Partikel jeweils einen Altgummikern enthalten, der auf seiner kompletten Oberfläche eine dauerelastische Ummantelung aufweist, die aus einem Bindemittel, enthaltend vollständig vernetzte Polymerkomponenten, besteht.

Das Bindemittel besteht aus einem Polymer und gegebenenfalls Zusatzstoffen. Vorzugsweise ist das Polymer ein aus einem oder mehreren Komponenten bestehendes Polyurethan oder ein Epoxidharz oder Latex. Als Zusatzstoffe können optional beispielsweise Farbpigmente zugesetzt werden.

Die Gummipartikel sind in der Regel unregelmäßig, n-eckig geformt und haben vorzugsweise eine mittlere Größe zwischen 0,4 mm und 2,5 mm bis maximal 4,0 mm.

Die einzelnen Gummipartikel sind über ihre komplette Oberfläche mit einem 5 µm bis 35 µm dicken Überzug versehen. Vorteilhaft bildet diese Umhüllung eine dauerelastische Ummantelung, die das Auswaschen von Schadstoffen wie zum Beispiel Zink weitgehendst verhindert. Außerdem wird durch diese Verkapselung der für Altgummi typische Gummigeruch auf ein Minimum reduziert.

Vorzugsweise enthält die Ummantelung Farbpigmente, welche die schwarze Farbe des Gummis komplett überdecken.

Die rieselfähigen, losen Gummipartikeln werden vorteilhaft durch ein Verfahren hergestellt, bei dem zerkleinerte Gummipartikel mit einem Bindemittel vermischt werden und die Mischung während des Vermischens und bis zum vollständigen Vernetzten der Polymerkomponenten kontinuierlich oder quasi-kontinuierlich in intensiver Bewegung gehalten wird, so dass das Bindemittel die Partikel vollständig umhüllt, ohne die einzelnen Partikel miteinander zu verkleben.

Vorzugsweise wird die Ummantelung hergestellt, indem 100 Gewichtsanteile Alt gummigranulat mit .5-10 Gewichtsanteilen Bindemitteln vermischt werden. Der Gewichtsanteil an Bindemittel ist vorteilhaft niedriger als nach dem Stand der Technik üblich.

Als Zusatzstoffe können beispielsweise bis zu 50 Gewichtanteile Kreide und Farbpigmente, bezogen auf das Bindemittel, beigemischt werden. Die Zusatzstoffe können mit dem Bindemittel vermischt oder separat beim Mischen mit den Gummipartikel zugeben werden.

Die Aushärtung des Bindemittels ist abhängig von dem verwendeten Polymer, diese wird im Falle der Polyurethane meist durch Zugabe von Wasser oder bei einem Mehrkomponentensystem durch Mischen der Komponenten injiziert. Im Falle der Epoxidharze geschieht dies durch Zugabe eines entsprechenden Katalysators.

Erfindungsgemäß wird das Ummanteln der Gummipartikel unter ständiger intensiver Bewegung durchgeführt. Durch die Zufuhr von kinetischer Energie, wird ein Verkleben der Gummipartikel während des Aushärteprozesses des Bindemittels vermieden. Unter ständiger intensiver Bewegung ist dabei jede kontinuierliche oder quasikontinuierliche, zyklische oder auch intermittierende, Bewegung zu verstehen, die vermeidet, dass sich die Partikel auf dem Boden bzw. an der Wandung des Mischbehälters absetzen oder aneinander anlagern.

Die intensive Bewegung wird vorzugsweise mittels eines Mischers, besonders vorzugsweise eines Fluidmischers erreicht. Dabei wird die Umfangsgeschwindigkeit, d. h. die Drehzahl des Mischers in Abhängigkeit des Durchmessers, hoch genug eingestellt, um ein Verkleben der Partikel untereinander zu verhindern, aber auch nicht so hoch, dass die Haftung des Bindemittels auf der Oberfläche der Partikel beeinträchtigt würde. Vorzugsweise wird dies in einem Fluidmischer mit einer optimalen Umfangsgeschwindigkeit zwischen 15 m/s und 20 m/s erreicht.

Alternativ kann diese intensive Bewegung beispielsweise auch durch Verwirbelung der Partikel erreicht werden. Eine solche Verwirbelung wird beispielsweise durch eine turbulente Luftströmung oder eine Wirbelschicht bewirkt.

Zur Erfindung gehört auch die Verwendung eines aus Altgummi hergestellten, dauerelastisch umhüllten Gummigranulats als Einstreumaterial für Kunstrasen.

Durch die Umhüllung ist das Gummigranulat umwelt- und geruchsneutral und optisch aufgewertet.

Anhand des folgenden Ausführungsbeispiels wird die Erfindung näher beschrieben:
Altautoreifen werden in bekannter Weise zu Partikeln mit einer Fraktionsgröße von 0,5 mm bis 2,5 mm zerkleinert. Bedingt durch die Zerkleinerung haben die Partikel eine unregelmäßige, vieleckige Form und eine dementsprechend große Oberfläche. 100 Gewichtsanteile dieser Partikel werden mit 7,35 Gewichtsanteilen eines Bindemittelgemischs in einem Fluidmischer FM10 der Firma Henschel Industrietechnik, Kassel, vermischt.

Das Bindemittelgemisch besteht aus den Komponenten (alle Bayer AG, Ludwigshafen), die in folgender Reihenfolge den vorgelegten Gummipartikeln zugemischt werden:
- 1,35 Gewichtsteilen Polyolkomponente bestehend aus Desmophen VP LS 2328 und Tyzor 9000
- 2,5 Gewichtsteilen Polyisocyanatkomponente Desmodur N 3400
- 3,5 Gewichtsteilen Pigmentmischung bestehend aus:
   1,558 Gewichtsteilen Chromoxidgrün GN-M
   + 0,882 Gewichtsteilen Bayferrox 318 M
   + 0,875 Gewichtsteile Bayferrox 3910
   + 0,185 Gewichtsteilen Tronox R-KB-2

Das Mischen geschieht bei ca. 1300 Umdrehungen pro Minute bei Umgebungstemperatur. Das Mischen wird kontinuierlich bis zum Aushärten des Bindemittels nach ca. 15 Minuten weitergefahren. Die Temperatur wird dabei unter 40 °C gehalten.

Das so erhaltene Gummipartikel sind nicht miteinander verklebt, rieselfähig, und an ihrer kompletten Oberfläche dauerelastisch umhüllt - mit einer mittleren Schichtdicke von ca. 10 µm bis 20 µm. Bedingt durch die unregelmäßige Form der Partikel ist die Schicht an manchen Stellen auch 30 µm bis 35 µm dick. Die schwarze Farbe des Altgummis wird durch die grünen Farbpigmente vollständig überdeckt.

## Patentansprüche

1. Lose, rieselfähige Gummipartikel als Einstreumaterial für Kunstrasen, die eine mittlere Größe zwischen 0,4 mm und 4,0 mm aufweisen und einen Altgummikern enthalten, der auf seiner kompletten Oberfläche eine dauerelastische, pigmentierte Ummantelung, bestehend aus einem Bindemittel, enthaltend vollständig vernetzte Polymerkomponenten, aufweist, wobei die Ummantelung eine Schichtdicke von 5 µm bis 35 µm aufweist.

2. Gummipartikel nach Anspruch 1, **dadurch gekennzeichnet, dass** sie aus 100 Gewichtsanteilen Altgummigranulat und 5 bis 10 Gewichtsanteilen Bindemittel bestehen.

3. Verfahren zur Herstellung von losen, rieselfähigen Gummipartikeln nach Anspruch 1 oder 2, **dadurch gekennzeichnet, dass** zerkleinertes Altgummi mit einem Polymerkomponenten enthaltenden Bindemittel vermischt und das Gemisch bis zum vollständigen Vernetzten der Polymerkomponenten kontinuierlich oder quasikontinuierlich bewegt wird, so dass das Bindemittel die Gummipartikel vollständig umhüllt, ohne sie miteinander zu verkleben.

4. Verfahren nach Anspruch 1 oder 2, **dadurch gekennzeichnet, dass** 100 Gewichtsanteile Altgummigranulat mit 5 bis 10 Gewichtsanteilen Bindemittel vermischt werden.

5. Verfahren nach Anspruch 3, **dadurch gekennzeichnet, dass** die intensive Bewegung in einem Fluidmischer erfolgt oder durch Verwirbelung bewirkt wird.

6. Verfahren nach Anspruch 5, **dadurch gekennzeichnet, dass** die Mischung und Bewegung in einem Fluidmischer mit einer Umfangsgeschwindigkeit zwischen 10 m/s und 25 m/s erfolgt.

7. Verfahren nach einem der Ansprüche 3 oder 4, **dadurch gekennzeichnet, dass** dem Bindemittel oder dem Gemisch aus Gummipartikeln und Bindemittel Zusatzstoffe beigefügt werden.

8. Verwendung von losen, rieselfähigen Gummipartikeln nach einem der Ansprüche 1 oder 2 als Einstreumaterial für Kunstrasen.

## Claims

1. Loose, free-flowing rubber particles as litter material for artificial turf, having an average size of between 0.4 and 4.0 mm, containing a core of scrap rubber, which on its total surface is provided with a permanently elastic, pigmented coating that consists of a binding agent, which contains completely cured polymer components, whereat the coating has a layer thickness of 5 µm to 35 µm.

2. Rubber particles according to claim 1 **characterized by** that they consist of 100 parts by weight of scrap rubber granular material and 5 to 10 parts by weight of binding agent.

3. Process for the manufacture of loose, free-flowing rubber particles to claim 1 or 2 **characterized by** that comminuted scrap rubber is mixed with a binding agent that contains polymer components, the mixture being continuously or quasi-continuously agitated until curing of the polymer components is completed so that the binding agent coats the particles totally without sticking the single particles together.

4. Process to claim 3 **characterized by** that 100 parts by weight of scrap rubber granular material are mixed with 5 to 10 parts by weight of binding agent.

5. Process to claim 3 **characterized by** that the intense agitation is carried out in a fluid mixer or is produced by vortexing.

6. Process to claim 3 **characterized by** that the mixing and agitation are carried out in a fluid mixer at a peripheral speed of between 10 m/s and 25 m/s.

7. Process to one of the claims 3 or 4 **characterized by** that additives are admixed to the binding agent or the mixture of rubber particles and binding agent.

8. Use of loose, free-flowing rubber particles to one of the claims 1 or 2 as litter material for artificial turf.

## Revendications

1. Particules de caoutchouc libres pouvant s'écouler, en tant que matériau a répandre dans les gazons artificiels, présentant une taille moyenne entre 0.4 et 4.0 mm et contenant un noyau de vieux caoutchouc ou de caoutchouc usagé, qui présente sur sa surface complète, une envelope pigmentée durablement élastique, constituée d'un agent liant, contenant des composants polymères entièrement reticules ou l'enveloppe présente une épaisseur de couche de 5 µm à 35 µm.

2. Particules de caoutchouc selon la revindication 1 **caractérisées en ce qu'**elles sont constituées de 100 parties en poids de granulat de vieux caoutchouc ou de caoutchouc usagé et de 5 à 10 parties en poids d'agent liant.

3. Procédé de production des particules des caoutchouc libres pouvant s'écouler selon la revindication 1 ou 2 **caractérisées en ce que** le vieux caoutchouc ou caoutchouc usagé réduit ou broyé est mélangé à un agent liant contenant un componsant polymère et la mélange est agité en continu ou de façon quasi continue jusqu'à réticulation complète des composants polymères, de sorte que l'agent liant enveloppe complètement les particules de caoutchouc sans les coller les unes aux autres.

4. Procédé selon la revendication 3, **caractérisé en ce que** 100 parties en poids de granulat de vieux caoutchouc ou de caoutchouc usagé sont mélangées à 5 à 10 parties en poids d'agent liant.

5. Procédé selon la revendication 3, **caractérisé en ce que** le mouvement intensif s'effectue dans un mélangeur de fluides ou est réalise par tourbillonnement.

6. Procédé selon la revendication 3, **caractérisé en ce que** le mélange et le movement s'effectuent dans un mélangeur de fluides à une vitesse pérephérique entre 10 m/s et 25 m/s.

7. Procédé selon l'une quelconque des revendications 3 ou 4 **caractérisé en ce que** l'on ajoute des additifs à l'agent liant ou au mélange de particules de caoutchouc et d'agent liant.

8. Utilisation de particules de caoutchouc libres pouvant s'écouler libre selon l'une des revendications 1 ou 2 comme matière à répandre dans les gazons artificiels.
